# EUROPEAN PATENT APPLICATION

(11) **EP 4 287 094 A1**
(43) Date of publication of application: **06.12.2023**
(21) Application number: 22176251.1
(22) Date of filing: 30.05.2022
(51) Int. Cl.: G06Q 20/34, G06Q 20/40

(54) **METHOD AND SYSTEM FOR VERIFYING A PAYMENT**

(71) Applicant: Surfboard Payments AB, 113 21 Stockholm (SE)
(72) Inventor: LINDFELDT, Christopher, 752 38 UPPSALA (SE); HINDOCHA, Neal, 222 70 LUND (SE)
(74) Representative: Noréns Patentbyrå AB

(57) **Abstract**

Method for verifying a payment made using a physical payment card (110), comprising the steps
engaging the physical payment card (110) in nearfield communication (NFC) with a payment terminal (120);
a payment software function (121) of the payment terminal receiving payment card identifying information from the card;
the payment software function communicating said identifying information to a server (130);
the server determining that a payment amount does not exceed a limit and performing either of:
a) determining that said verification method does not allow an online PIN authentication method, and triggering an online card holder authentication step; or
b) determining that said verification method allows an online PIN authentication method, and allowing the payer to enter a PIN which is transmitted to the card issuer,

the method further comprising providing payment confirmation information to a payee (150).

## Description

The present invention relates to a method and a system for verifying a payment, in particular a payment performed by a payer in relation to a payee and using a physical debit or credit payment card.

More particularly, the present method and system relates to such payments when the payment device is brought into close proximity to, or into direct contact with, a payment terminal (sometimes called "tapping" of the physical payment card).

There are various conventional ways of guaranteeing security for the payee and/or a payment card issuer, that are used when handling different combinations of terminal types and payment card types.

For instance, some payment cards are associated with a maximum payment amount limit, below which payment can be performed without any additional authentication apart from providing the payment card details, such as a credit card number and an expiration date. If the payment amount exceeds said limit, an additional authentication step is then required.

Such additional authentication steps may include one or several of the entering and verification of a PIN code by the payer; the user providing a written signature; and the user participating in a challenge-response-type interaction directly with the payment card issuer. For instance, under the EMV set of standards various 3DS (3D Secure) authentication schemes are employed.

Furthermore, some payment cards support offline PIN validation (wherein the purchase is authenticated directly via the terminal and the payment card), whereas other payment cards support online PIN validation (wherein an entered PIN is sent to the issuer for verification).

This proliferation of different authentication methods has arisen as a result of the desire to prevent various security breaches, such as card theft and fraud, skimming and replay attacks.

It would be desirable to provide a secure solution where any physical payment card can be used for payments with a wide selection of payment terminals, with full flexibility but still allowing for a user experience that is simple, fast and straightforward.

The present invention solves the above described problems.

Hence, the invention relates to a method for verifying a payment made using a physical payment card, the method comprising the steps
engaging the physical payment card in nearfield communication (NFC) with a payment terminal;
a payment software function executing on or from the payment terminal receiving, via said nearfield communication, payment card identifying information from the physical payment card;
the payment software function communicating said payment card identifying information to a central server;
the central server determining that a payment amount does not exceed a payment limit associated with the physical payment card, based on a card holder verification method (CVM) associated with the payment card identifying information; and
the central server performing either of the following steps:
   a) determining that said card holder verification method does not allow an online PIN authentication method, and as a consequence thereof triggering an online card holder authentication step in which a payment card issuer is allowed to verify the payer as an authenticated card holder directly; or
   b) determining that said card holder verification method does allow an online PIN authentication method, as a consequence thereof causing said payment software function to allow the payer to enter a PIN and causing said PIN to be transmitted to the card issuer for verification of the payer as an authenticated card holder,
wherein the method further comprises providing payment confirmation information to a payee.

In some embodiments, the payment terminal is a mobile device of the payee.

In some embodiments, the determining that said card holder verification method allows and/or does not allow an online PIN authentication method is performed by the central server by sending an authentication request to the payment card issuer and receiving a response from the payment card issuer that the payment card does or does not allow an online PIN authentication method.

In some embodiments, the payment card identifying information comprises payment card-specific information including a unique payment card number.

In some embodiments, the online card holder authentication step is a three-domain authentication step, such as a 3DS authentication step.

In some embodiments, the online card holder authentication step comprises the card issuer sending a piece of secret information to the payer; the payment software function allowing the payer to enter the piece of secret information into the payment terminal; and the payment software function transmitting the information entered, or information derived therefrom, to the card issuer, possibly via the central server.

In some embodiments, the online card holder authentication step is performed in direct communication contact between the payer and the card issuer, without the payment software function participating.

The invention also relates to a system for verifying a payment made using a physical payment card, the system comprising a payment software function executing on or from a payment terminal and a central server,
the payment terminal being arranged to engage a physical payment card in nearfield communication (NFC), whereby the payment software function receives, via said nearfield communication, payment card identifying information from the physical payment card; the payment software function being arranged to communicate said payment card identifying information to the central server;
the central server being arranged to determine that a payment amount does not exceed a payment limit associated with the physical payment card, based on a card holder verification method (CVM) associated with the payment card identifying information; and
the central server being arranged to perform either of the following steps:
   a) determining that said card holder verification method does not allow an online PIN authentication method, and as a consequence thereof triggering an online card holder authentication step in which a payment card issuer is allowed to verify the payer as an authenticated card holder directly; or
   b) determining that said card holder verification method does allow an online PIN authentication method, as a consequence thereof causing said payment software function to allow the payer to enter a PIN and causing said PIN to be transmitted to the card issuer for verification of the payer as an authenticated card holder.

In the following, the invention will be described in detail, with reference to exemplifying embodiments of the invention and to the enclosed drawings, wherein:
Figure 1 is an overview of a system;
Figure 2 is a sequence diagram illustrating an exemplifying first method performed by the system shown in Figure 1;
Figure 3 is a sequence diagram illustrating an exemplifying second method performed by the system shown in Figure 1; and
Figure 4 is a sequence diagram illustrating an exemplifying third method performed by the system shown in Figure 1.

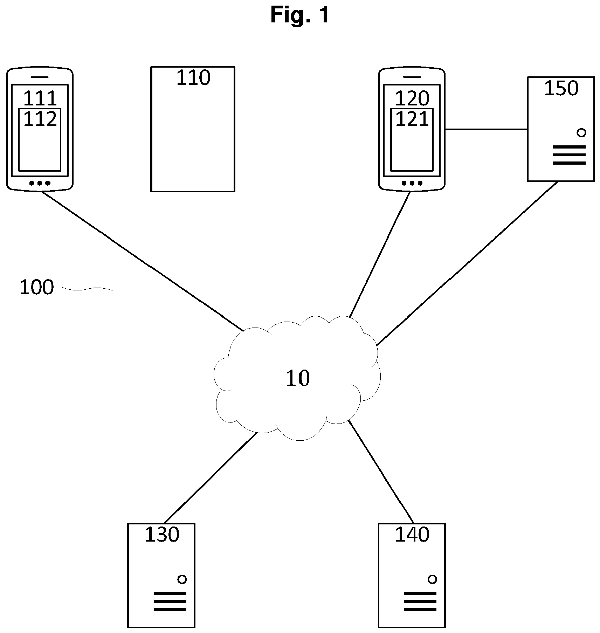

Hence, Figure 1 illustrates a system 100 for verifying a payment made using a physical payment card 110. The physical payment card 110 may be, by way of example, a debit or credit card. That the payment card 110 is "physical" means that it is in the form of a physically embodied card, as opposed to a virtual card of the type known to, for instance, be installed on a smartphone. Hence, it is question of a hard, such as plastic or metal, card of standard size, such as generally flat, relatively thin and rectangular.

Such payment cards are of course well-known per se, and will not be described in closer detail herein. However, the payment card 110 may comprise security features such as a magnetic strip and, preferably, an electronic circuit and an antenna for wireless communication. In particular, the payment card 110 has nearfield wireless communication capabilities, hereinafter denoted "NFC".

The NFC capability of the payment card 110 allows it to be used by "tapping" the payment card 110 onto an NFC-compatible payment terminal 120 so as to make a digital communication connection between the payment card 110 and the payment terminal 120, the communication connection allowing digital information to be passed from the payment card 110 to the payment terminal 120. Hence, the payment terminal 120 also comprises a wireless antenna and supports NFC.

As used herein, "tapping" may mean bringing the payment card 120 into direct physical contact with the payment terminal 120 or at least bringing the payment card 120 into sufficiently close proximity to the payment terminal 120 so as to allow a communication connection of the type discussed above to be established and used.

Figure 1 also the payment terminal comprising a payment software function 121. The payment terminal 120 may be a mobile device of a payee, such as a merchant. For instance, the payment terminal 120 may be a mobile general-purpose computing and communication device, such as a conventional smartphone. In this case, the payment software function 121 may be an installed application executing on the payment terminal 120. In other examples, the payment terminal 120 may be a card reader capable of executing custom software, that may then be installed on the payment terminal 120. In all such cases, the payment software function 121 may be executed on the hardware of the payment terminal 120, for instance in the form of an installed app, or be executed from the payment terminal 120, such as via a cloud service accessible from the payment terminal 120 via an internet 10 connection or in a browser of the payment terminal 120, or any combination of these various options.

The payment terminal 120 preferably does not comprise a physical card reader, such as a payment card chip or magnetic stripe reader. Instead, the only means for communication between the payment card 110 and the payment terminal 120 is via said wireless NFC connection.

Figure 1 further shows a central server 130. The central server 130 is "central" in the sense that it has a well-defined address and/or API via which it can be accessed by remote parties, such as by the payment software function 121. As such, the central server 130 is arranged to perform certain functionality as described herein, the functionality preferably being performed by specifically designed software but possibly at least partly being performed by specifically designed hardware. Said software of the central server 130 may be executed on physical or virtual hardware, or a combination thereof. The central server 130 may comprise one or several interconnected physical and/or virtual computer servers, as the case may be.

Figure 1 also shows a card issuer 140, which may be any card-issuing company. The card issuer 140 may be or comprise a server that may be "central" in the corresponding sense as for the central server 130, these servers then being arranged to communicate with each other via the internet 10. Figure 1 does not show an acquiring bank or payment processor, but it is realised that it is customary for such an entity to be used as an intermediary between the payment terminal 120 and the card issuer 140 in various ways. For reasons of simplicity, whenever the "card issuer" is mentioned herein, this entity may encompass also an acquiring bank or a payment processor, as the case may be.

Figure 1 also shows a payee 150, such as a merchant or any other payment-receiving entity. The payee 150 may be or comprise a server that may be "central" in the corresponding sense as for the central server 130. The payee 150 controls the payment terminal 120 in the sense that the payee 150 provides the payment terminal 120 as a physical hardware entity to the payor to tap the payment card 110 onto. A server of the payee 150 may be arranged to communicate, via the internet, with the payment terminal 120, such as with the payment software function 121, via a suitable API.

In preferred cases, an operator of the central server 130 is also a provider of the payment software function 121, and/or the central server 130 and the payment software function 121 are specifically arranged to communicate with each other, such as in a secure way using encryption. For instance, the central server 130 may provide an available API using which the payment software function 121 can call upon the central server 130 to initiate various requests and actions. The communication between the payment software function 121 and the central server 130 may be directly or via an intermediary.

Figure 1 also shows a mobile device 111 controlled by (such as belonging to) the payer. The mobile device 111 may have a display capable of displaying an interactive user interface, such as in an internet browser 112 executing on the mobile device 111. In exemplifying cases, the mobile device 111 may be a conventional smartphone.

All entities 111, 120, 130, 140, 150 typically communicate digitally via the internet 10.

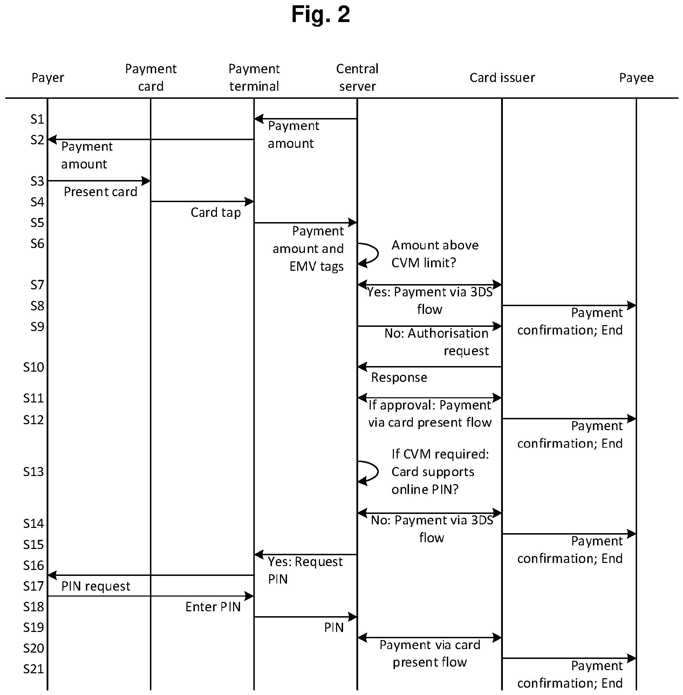

Figure 2 is a sequence diagram illustrating a method according to the present invention.

In a first step, the method starts.

In a subsequent step S1, a transaction is identified, including a payment amount. In Figure 2, it is illustrated how the central server 130 provides the payment amount to the payment terminal 120. This may be the case, for instance, if a merchant uses an API of the central server 130 to initiate a purchase. However, the payment terminal 120 may instead have knowledge of the payment amount without having to receive the payment amount from the central server 130, such as by the payee interacting with the payment terminal 120 to identify the transaction. It may be the payment software function 121 that receives or establishes the payment amount in step S1.

In a subsequent step S2, the payment amount is communicated to the payer, such as displayed to the payer on a display of the payment terminal 120. Again, it may be the payment software function 121 that performs this step S2.

In a subsequent step S3, the payer presents the physical payment card 110, such as to the payee.

In a subsequent step S4, generally performed using the payment software function 121, the physical payment card 110 is tapped onto the payment terminal 120, in the way described above. More broadly put, the physical payment card 110 is engaged in nearfield communication (NFC) with the payment terminal 120.

As mentioned, the tapping results in a digital communication between the physical payment card 110 and the payment terminal 120, and in particular a transfer of information from the physical payment card 110 to the payment terminal 120.

In particular, payment card identifying information, in practical use cases for instance comprising so-called EMV (Eurocard Mastercard VISA) tags, is transferred from the payment card 110 to the payment terminal 120 via the nearfield communication.

By way of example, the payment terminal 120 can read an AID (Application ID) value that is wirelessly broadcast by the physical payment card 110 over the NFC channel. Using the received AID, the payment terminal 120 will be able to determine certain properties, such as a type, of the physical payment card 110. Based on the received AID, the payment terminal 120 may also determine a correct EMV kernel (of the payment terminal 120) to use for further communications with the payment card 110.

In a subsequent step S5, the payment terminal 120, and in particular the payment software function 121, communicates the payment card identifying information to the central server 130. For instance, the payment software function 121 may form a so-called EMV bundle, comprising payment card identifying information, and send the thus formed EMV bundle to the central server 130. What is important is that the central server 130, based on the payment card identifying information, is able to determine security properties of the physical 110 payment card that are sufficient to perform the later steps of the presently described method.

The payment card identifying information may comprise physical payment card-specific information including a unique payment card number and possibly also a card expiration date.

In some cases, the information communicated from the payment terminal 120 to the central server 130 in step S5 will also include payment information, such as a payment amount. If this information is already accessible by, or stored in, the central server 130, this is not necessary.

It is noted that no CMV (Cardholder Verification Methods) are performed in steps 1-5. In particular, no PIN entry is requested of the payer.

After step S5, the central server 130 will have knowledge both of the payment amount and the payment card identifying information (and hence a type of the physical payment card 110).

In a subsequent step S6, the central server 130 checks the payment amount against a payment limit associated with the physical payment card 110, based on a CVM (Cardholder Verification Method) associated with the payment card identifying information. Put more simply, the central server 130 checks whether the payment amount is below the CVM limit of (associated with) the physical payment card 110, using the information received from the payment terminal 120 in step S5. The CVM limit may be an absolute limit or a cumulative limit over a certain time period, as the case may be.

In case the payment amount is above the CVM limit, an online card holder authentication step S7 is performed, in which the card issuer 140 is allowed to directly verify the payer as an authenticated payment card holder. For instance, this online card holder authentication step may be a three-domain authentication step, such as a so-called 3DS authentication step. In practise, the central server 130 or the card issuer 140 will initiate an payer authentication procedure, for instance in relation to an external service (such as a 3DS server), during which procedure the payer can use a personal authentication application on his mobile device (such as "BankID" in Sweden); verify a one-time password received via a QR code or SMS/email channels; or similar, to prove that he is actually the person he claims to be. Such user authentication procedures are well-known in themselves and will not be detailed any further herein. What is important is that the procedure allows the card issuer 140 to directly and securely authenticate the user for the transaction in question.

In practise, the online card holder authentication step S7 may, from the payer's point of view, be initiated using the payment terminal 120. For instance, the payment software function may case a display of the payment terminal 120 to display the text "please verify this transaction using BankID on your device" or "please enter the one-time password provided to your device via SMS". Alternatively, the online card holder authentication step S7 may be directly initiated in the mobile device 111 of the payer, such as in the internet browser 112 executing on the payer's device 111 and displaying an interactive user interface on the display thereof, on the initiative of the central server 130 or the car issuer 140.

Once the payer has been authenticated, such as has approved or accepted the 3D Secure challenge provided, the output from the online card holder authentication step S7 (such as the 3D Secure flow), combined with the payment card identifying data sent to the central server 130 in step S5, is processed, by the card issuer 140, through a so-called card not present (online payment) flow.

The payee is thereafter, in step S8, provided with payment confirmation, and the method ends.

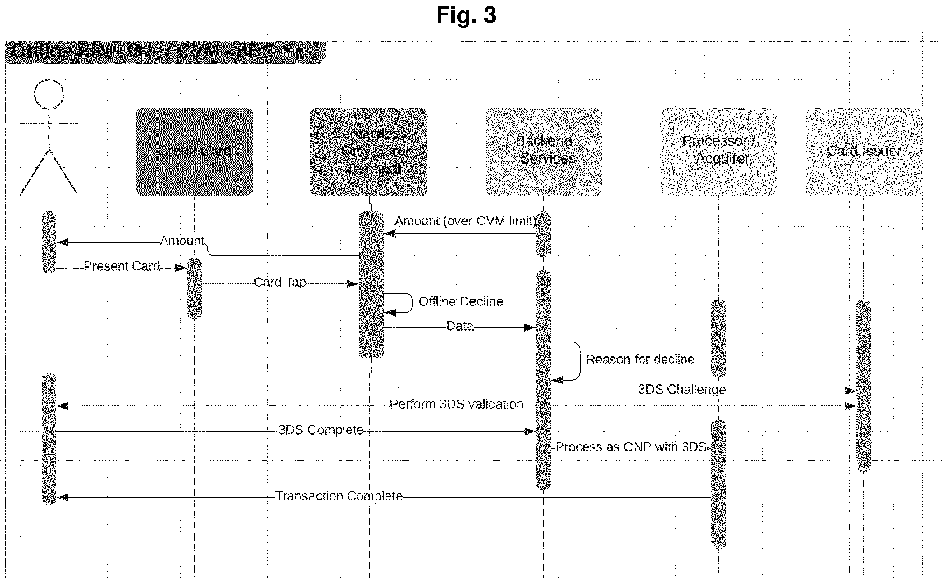

In case the payment amount is above the CVM limit, it is also possible that a so-called "offline decline" message accrues in the payment terminal 120. This means that the payment terminal 120 is unable to find an acceptable authentication method supported both by the payment card 110 and the payment terminal 120. For instance, this may be the case when the payment terminal 120 does not have a physical card reader and the payment card 110 only supports offline PIN. In this case, information relating to the issued offline decline (comprising information identifying the reason for the offline decline occurring) may be sent to the central server 130 for analysis. In case the reason for the offline decline occurring is determined, by the central server 130, to be that the payment card 110 only supports offline PIN, or in case the reason for the offline decline is unknown, the central server 130 initiates step the online card holder authentication step S7 described above. In case the reason for the offline decline instead is, for instance, the payment card 110 being blocked by the card issuer 140, the central server 130 may cause the payment software function 121 to display, on the payment terminal 120 display, a message to the user to this end. This scenario is shown in an exemplifying sequence diagram in Figure 3a. In Figures 3a and 3b, "backend services" is the central server 130; the "Processor/Acquirer" may be a bank or similar; and CNP means "card not present".

If and when the check in step S6 instead results in that the payment amount is not above the limit in question (the central server 130 determines that the payment amount does not exceed the payment limit associated with the physical payment card 110 based on a CVM method associated with the payment card identifying information), the central server 130 may do one of several different things depending on whether the physical payment card 110 supports a so-called "online PIN" procedure for payment amounts not exceeding the CVM limit. This will be described in the following.

First, however, an authorisation request may be sent, in a step S9, from the central server 130 to the card issuer 140 or an acquiring bank/processor.

In step S10, the card issuer then sends back, to the central server 130, a response to the authorisation request sent in step S9.

In case the authorisation request response received in step S10 indicates that the payment request is approved, the central server 130 initiates, in a step S11, the payment via a conventional "card present" payment flow. In a subsequent step S12, payment confirmation is provided to the payee, in a way corresponding to the above (step S8). Then, the method ends.

In case the authorisation request instead indicates that CVM is required for the payment, central server 130, in a step S13, determines (if the central server 130 has not already done so previously) whether or not the physical payment card 110 supports an "online PIN" procedure or authentication method.

If an online PIN procedure is not supported by the physical payment card 110, the central server 130 as a consequence thereof triggers, in a step S14, an online card holder authentication step in which the card issuer 140 is allowed to verify the payer as an authenticated card holder directly. This online card holder authentication step S14, and a subsequent payment confirmation step S15, may be similar to the one performed in steps S7 and S8, and may in particular be a 3D Secure flow. Thereafter, the method ends.

The online card holder authentication step may comprise the card issuer 140 sending a piece of secret information (such as a one-time password as described above) to the payer, such as to the device 111, via a suitable channel in a way corresponding to the above-described; the payment software function 121 allowing the payer to enter the piece of secret information into the payment terminal 120 via its display and interactive user interface; and the payment software function 121 transmitting the information entered, or information derived therefrom, to the card issuer 140, possibly via the central server 130.

Alternatively, the online card holder authentication step may be performed in direct communication contact between the payer and the card issuer 140, without the payment software function 121 participating.

In the opposite case, in which the physical payment card 110 does actually support an online PIN authentication method, the central server 130 as a consequence thereof causes the payment software function 121 to allow the payer to enter a PIN (such as an alphanumerical string of at least 4 characters) and causing said PIN to be transmitted to the card issuer 140 for verification of the payer as an authenticated card holder.

In practise, this may take place by the central server 130, in a step S16, causing the payment terminal 120 to allow the payer to, via an interactive user interface displayed by the payment software function 121 on a display of the payment terminal 120, enter the PIN. Hence, the payment software function 121 requests, in a step S17, the payer to enter the PIN, and the payer enters, in a step S18, the PIN into said user interface. Then, the payment terminal 120, such as the payment software function 121, in a step S19 provides the entered PIN to the central server 130.

Then, in a step S20 the central server 130 initiates the payment via a "card present" flow, possibly using the entered PIN for verification by the card issuer 140.

The payee receives payment confirmation in a step S21, in a way corresponding to what has been described above in connection to steps S8, S12 and S15.

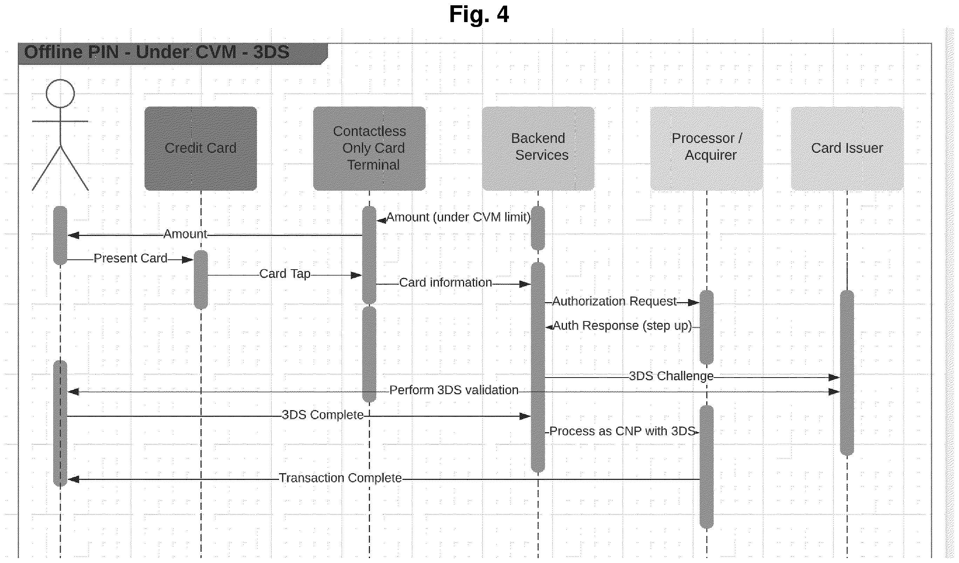

Alternatively, the authorisation request may comprise a "step up to contact" response from the card issuer 140 or the acquiring bank or processor. The reason for this response may be unknown to the payment terminal 120 (it may be the case that a cumulative limit has been exceeded, or that a fraud detection algorithm has been triggered), but preferably results in the central server 130 initiating the online card holder authentication step S14 described above. This case is shown in an exemplifying sequence diagram in Figure 4.

The determining that the physical payment card 110 supports an online PIN authentication method (that the card holder verification method allows and/or does not allow an online PIN authentication method) may be performed by the central server 130 sending said authentication request (step S9), to the payment card issuer 140, and the received response from the payment card issuer 140 may then indicate that the physical payment card 110 does or does not allow such an online PIN authentication method. Alternatively, the payment card identifying information received by the central server 130 from the payment terminal 120 may already comprise this information, or information using which it is possible for the central server 130 to determine this information, for instance by posing a question (automatic query-response via suitable API) to the card issuer 140.

Thereafter, the method ends.

As mentioned, the invention also relates to the system 100 as such, comprising the payment software function 121 executing on or from the payment terminal 120 (which itself may or may not form part of the system 100). The system 100 also comprises the central server 130, including any software performing the functionality of the central server 130 described herein.

As used herein, "online PIN" means that the PIN is communicated via the internet to the card issuer 140 for verification. In contrast, "offline PIN" means that the PIN is entered into the payment terminal 120 and verified only by the payment terminal 120.

Above, preferred embodiments have been described. However, it is apparent to the skilled person that many modifications can be made to the disclosed embodiments without departing from the basic idea of the invention.

For instance, many other and additional functionalities may be provided and performed by the central server 130 and the payment software function 121.

All that has been said in relation to the present method is equally applicable to the present system 100, and vice versa.

Hence, the invention is not limited to the described embodiments, but can be varied within the scope of the enclosed claims.

## Claims

1. Method for verifying a payment made using a physical payment card (110), comprising the steps
engaging the physical payment card (110) in nearfield communication (NFC) with a payment terminal (120);
a payment software function (121) executing on or from the payment terminal (120) receiving, via said nearfield communication, payment card identifying information from the physical payment card (110);
the payment software function (121) communicating said payment card identifying information to a central server (130);
the central server (130) determining that a payment amount does not exceed a payment limit associated with the physical payment card (110), based on a card holder verification method (CVM) associated with the payment card identifying information; and
the central server (130) performing either of the following steps:
a) determining that said card holder verification method does not allow an online PIN authentication method, and as a consequence thereof triggering an online card holder authentication step in which a payment card issuer (140) is allowed to verify the payer as an authenticated card holder directly; or
b) determining that said card holder verification method does allow an online PIN authentication method, as a consequence thereof causing said payment software function (121) to allow the payer to enter a PIN and causing said PIN to be transmitted to the card issuer (140) for verification of the payer as an authenticated card holder,
wherein the method further comprises providing payment confirmation information to a payee (150).

2. Method according to claim 1, wherein
the payment terminal (120) is a mobile device of the payee.

3. Method according to claim 1 or 2, wherein
the determining that said card holder verification method allows and/or does not allow an online PIN authentication method is performed by the central server (130) by sending an authentication request to the payment card issuer (140) and receiving a response from the payment card issuer (140) that the payment card does or does not allow an online PIN authentication method.

4. Method according to any one of the preceding claims, wherein
the payment card identifying information comprises payment card-specific information including a unique payment card number.

5. Method according to any one of the preceding claims, wherein
the online card holder authentication step is a three-domain authentication step, such as a 3DS authentication step.

6. Method according to claim 5, wherein
the online card holder authentication step comprises the card issuer (140) to send a piece of secret information to the payer; the payment software function (121) allowing the payer to enter the piece of secret information into the payment terminal (120); and the payment software function (121) transmitting the information entered, or information derived therefrom, to the card issuer (140), possibly via the central server (130).

7. Method according to claim 5, wherein
the online card holder authentication step is performed in direct communication contact between the payer and the card issuer (140), without the payment software function (121) participating.

8. System (100) for verifying a payment made using a physical payment card (110), the system (100) comprising a payment software function (121) executing on or from a payment terminal (120) and a central server (130),
the payment terminal (120) being arranged to engage a physical payment card (110) in nearfield communication (NFC), whereby the payment software function (121) receives, via said nearfield communication, payment card identifying information from the physical payment card (110);
the payment software function (121) being arranged to communicate said payment card identifying information to the central server (130);
the central server (130) being arranged to determine that a payment amount does not exceed a payment limit associated with the physical payment card (110), based on a card holder verification method (CVM) associated with the payment card identifying information; and
the central server (130) being arranged to perform either of the following steps:
a) determining that said card holder verification method does not allow an online PIN authentication method, and as a consequence thereof triggering an online card holder authentication step in which a payment card issuer (140) is allowed to verify the payer as an authenticated card holder directly; or
b) determining that said card holder verification method does allow an online PIN authentication method, as a consequence thereof causing said payment software function (121) to allow the payer to enter a PIN and causing said PIN to be transmitted to the card issuer (140) for verification of the payer as an authenticated card holder.
